# EUROPÄISCHE PATENTANMELDUNG

(11) **EP 1 834 858 A2**
(43) Veröffentlichungstag der Anmeldung: **19.09.2007**
(21) Anmeldenummer: 07450045.5
(22) Anmeldetag: 14.03.2007
(51) Int. Cl.: B62B 3/14, G07F 5/10, G07F 17/16

(54) **Handwagen mit einem Pfandschloss**

(30) Priorität: 14.03.2006 AT 4112006
(71) Anmelder: AQA Wassermarketing GmbH, 1010 Wien (AT)
(72) Erfinder: Oberleitner, Andreas, 2492 Zillingdorf (AT)
(74) Vertreter: Haffner, Thomas M.

(57) **Zusammenfassung**

Bei einem Handwagen, insbesondere Einkaufswagen, mit einer elektrischen Schaltung (11) mit einem Stromkreis und einem in den Stromkreis eingebundenen Aufnahmefach (1) für eine Pfandmarke (3), wobei der Stromkreis in Abhängigkeit von der Anwesenheit einer Pfandmarke (3) im Aufnahmefach (1) geschlossen oder unterbrochen ist, weist das Aufnahmefach (1) wenigstens zwei elektrische Kontakte (2,4) zum Kontaktieren von Gegenkontakten der Pfandmarke (3) auf.

## Beschreibung

Die Erfindung betrifft einen Handwagen, insbesondere Einkaufswagen, mit einer elektrischen Schaltung mit einem Stromkreis und einem in den Stromkreis eingebundenen Aufnahmefach für eine Pfandmarke, wobei der Stromkreis in Abhängigkeit von der Anwesenheit einer Pfandmarke im Aufnahmefach geschlossen oder unterbrochen ist.

Ein derartiger Wagen, insbesondere Einkaufswagen, ist beispielsweise der EP 1101204 B1 zu entnehmen. Das bei einem derartigen Einkaufswagen vorgesehene Aufnahmefach für eine Pfandmarke weist zumeist die Funktion eines Pfandschlosses auf, das beim Einstecken eines Pfandes im Form einer Münze, einer Karte oder eines Schlüssels ein meist kettenförmiges Verbindungsteil zu einem anderen Wagen frei gibt, sodass der Wagen benutzt werden kann. Sobald der Wagen wieder an seine Basisstation zurück gebracht und über das verbindungsteil an einen anderen Wagen gekoppelt ist, wird das Pfand frei gegeben.

Weiters ist es bereits bekannt, Handwägen, und insbesondere Einkaufswägen, mit elektrischen Schaltungen zu versehen, um zusätzliche Funktionen zu ermöglichen. Beispielsweise beschreibt die WO 96/11130 A1 eine Griffeinheit, die zum Anbau an einen Einkaufswagen bestimmt ist und wenigstens eine elektrische Schaltung mit einem Strichcodeleser und einer Anzeigevorrichtung zum Anzeigen von produktrelevanten Informationen beinhaltet. Eine Stromquelle, die Bestandteil des Einkaufswagens ist, sorgt für die Bereitstellung der erforderlichen elektrischen Energie. Eine weitere elektronische Zusatzfunktion für einen Einkaufswagen ist aus der EP 435225 A1 bekannt geworden, wobei ebenfalls eine Anzeigevorrichtung an einem Einkaufswagen vorgesehen ist, welche der Anzeige von von einer Empfangseinheit empfangenen Informationen, wie zum Beispiel Werbemitteilungen, dient. Die am Einkaufswagen vorgesehene Empfangseinheit kann auch zum Empfangen von mit einem Ortskennungscode versehenen Informationen stationärer Sendeeinheiten verwendet werden, wobei die entsprechenden Daten zwischengespeichert und anschließend einer Kundenstromanalyse unterzogen werden können. Die Energieversorgung der Elektronik erfolgt wiederum mit Hilfe einer eingebauten Stromquelle, wie beispielsweise eines Akkus.

Neben der Verwendung von Batterien oder Akkus für die Energieversorgung der im Einkaufswagen eingebauter Elektronik sind auch bereits Vorschläge bekannt geworden, bei welchen die Energie aus der Bewegung des Wagens gewonnen wird, beispielsweise mittels eines Dynamos. Derartige Systeme sind jedoch mit relativ großem Aufwand verbunden. Das Vorsehen von Batterien oder wiederaufladbaren Akkus hat wiederum zur Folge, dass der Wartungsaufwand durch die Notwendigkeit der regelmäßigen Kontrolle des aktuellen Ladestatus sowie das Auswechseln bzw. Aufladen der Batterien bzw. Akkus beträchtlich ist.

Um den Stromverbrauch der in einem mit einem Pfandschloss versehenen Einkaufswagen vorgesehenen elektrischen Schaltung zu minimieren, ist in der EP 1101204 B1 vorgeschlagen worden, dass Pfandschloss in den Stromkreis der elektrischen Schaltung einzubinden, wobei der Stromkreis durch Mitwirken eines im Pfandschloss befindlichen Schaltelements nach Einführen eines Pfandes in das Pfandschloss geschlossen und nach Herausgabe des Pfandes unterbrochen ist. Dadurch wird sichergestellt, dass eine Benutzung des Systems und damit ein Stromverbrauch nur dann erfolgt, wenn der Einkaufswagen nach Einführen des Pfandes entsperrt und einer Benutzung zugeführt wird. In versperrtem Zustand, d.h. im Außer-Betriebszustand, ist der Stromkreis hingegen unterbrochen, sodass kein Strom verbraucht wird. Die Integration eines gesonderten Schaltelements in das Pfandschloss führt jedoch zu einem erhöhten schaltungstechnischen und baulichen Aufwand. Weiters führt die aus der EP 1101204 B1 bekannt gewordene Einrichtung zwar zu einer Senkung des Stromverbrauchs, eine integrierte Stromquelle verbunden mit dem Problem der begrenzten Speicherkapazität und des regelmäßigen Austauschens bzw. Aufladens der Stromquelle ist aber nach wie vor notwendig.

Die vorliegende Erfindung zielt daher darauf ab, den schaltungstechnischen und baulichen Aufwand für ein in den Stromkreis einer elektrischen Schaltung eingebundenes Aufnahmefach für eine Pfandmarke zu reduzieren und gleichzeitig eine einfache und verschleißresistente Bauweise sicher zu stellen, sodass der Wartungsaufwand minimiert werden kann. Weiters zielt die vorliegende Erfindung darauf ab, das Aufnahmefach für die Aufnahme von verschiedenartig ausgebildeten Pfandmarken geeignet zu machen, wobei neben konventionellen Geldmünzen auch Pfandmarken Verwendung finden sollen, welche mit einer Zusatzfunktion verbunden sind.

Zur Lösung dieser Aufgabe besteht die Erfindung ausgehend von einem Handwagen der eingangs genannten Art im Wesentlichen darin, dass das Aufnahmefach wenigstens zwei elektrische Kontakte zum Kontaktieren von Gegenkontakten der Pfandmarke aufweist. Dadurch, dass nun durch das Vorsehen von zwei elektrischen Kontakten eine direkte Kontaktierung der Pfandmarke nach Einschieben derselben in das Aufnahmefach erfolgt, entfällt die Notwendigkeit gesonderter Schalterbauteile im Aufnahmefach. Der Stromkreis der im Handwagen vorgesehenen elektrischen Schaltung wird nach Einschieben beispielsweise einer elektrisch leitenden Pfandmarke dadurch geschlossen, dass die im Aufnahmefach vorgesehenen elektrischen Kontakte mit den Gegenkontakten der Pfandmarke zusammen wirken. Dadurch wird eine einfache und robuste Bauweise sichergestellt, welche ohne zusätzliche Schalterelemente auskommt.

Gemäß einer bevorzugten Weiterbildung können die elektrischen Kontakte in den Aufnahmequerschnitt des Aufnahmefachs ragend angeordnet sein, wobei vorzugsweise die Kontakte von Kontaktfedern gebildet sind. Eine derartige Ausbildung gewährleistet eine sichere Kontaktierung der eingeschobenen Pfandmarke, wobei durch das Vorsehen von Kontaktfedern eine ausreichende Kontaktierungskraft eingestellt werden kann, sodass ein elektrisches Zusammenwirken der elektrischen Kontakte mit den Gegenkontakten der Pfandmarke auch dann erfolgt, wenn der Handwagen den bei der Benützung üblicher Weise zu beobachtenden Erschütterung ausgesetzt ist. Weiters wird durch das Vorsehen von Kontaktfedern sichergestellt, dass eine Kontaktierung auch bei unterschiedlich dimensionierten Pfandmarken hergestellt wird, sodass eine größtmögliche Flexibilität hinsichtlich der Auswahl der Pfandmarke geboten wird.

In vorteilhafter Weise ist die Ausbildung derart weitergebildet, dass der Stromkreis eine Stromquelle aufweist und die elektrischen Kontakte in Serie mit der Stromquelle geschalten sind, sodass der Stromkreis nach Einschieben einer elektrisch leitenden Pfandmarke über die Pfandmarke geschlossen wird. Bei einer derartigen Ausbildung muss somit eine elektrisch leitende Pfandmarke verwendet werden, oder zumindest eine Pfandmarke, deren beide elektrische Kontakte leitend mit einander verbunden sind, wobei nach Einschieben einer derartigen Pfandmarke die im Aufnahmefach vorgesehenen Kontakte, wie beispielsweise Federkontakte, die eingeschobene Pfandmarke, wie beispielsweise eine Geldmünze, an zwei in Abstand voneinander angeordneten Kontaktpunkten kontaktieren, sodass der Stromkreis der elektrischen Schaltung geschlossen wird und die elektrische Schaltung mit dem Strom der Stromquelle versorgt wird. Dabei können die Kontakte des Aufnahmefaches beispielsweise derart angeordnet sein, dass sie die Ober- und die Unterseite der Münze abgreifen. Insgesamt ergibt sich der Vorteil, dass sich die Elektronik des Einkaufswagens erst durch das Einschieben der Münze aktiviert, sodass keine Energieverschwendung auftritt, da der Stromkreis lediglich dann geschlossen wird, wenn der Einkaufswagen tatsächlich benutzt wird.

Während bei der zuvor beschriebenen Ausbildung eine interne Stromquelle nach wie vor notwendig ist, kann gemäß einer bevorzugten Weiterbildung sogar auf eine derartige interne Stromquelle verzichtet werden, wenn die elektrischen Kontakte zur Parallelschaltung einer in das Aufnahmefach als Pfandmarke eingelegten Stromquelle, wie z.B. Knopfzelle, Batterie oder dgl., mit den übrigen Bauteilen der elektrischen Schaltung geschaltet sind. In diesem Fall enthält der Einkaufswagen lediglich die elektrische Schaltung bzw. die Elektronik, wobei die Kontakte des Aufnahmefaches parallel zur Elektronik geschaltet sind. In diesem Fall hat das Einschieben einer konventionellen Pfandmarke, wie beispielsweise einer Geldmünze, keine Wirkung. Wird hingegen eine Batterie, wie beispielsweise eine Knopfzelle in der Größe einer Pfandmarke, eingeführt, wird die Elektronik mit Strom versorgt und aktiviert. Dies hat ein Vorteil, dass der Benutzer frei wählen kann, ob er die durch die im Einkaufswagen vorgesehene elektrische Schaltung ermöglichte Zusatzfunktion nutzen möchte oder nicht. Will der Benutzer die Elektronik nicht nutzen, schiebt er eine Münze ein und verwendet den Wagen wie einen gewöhnlichen Einkaufswagen. Möchte der Benutzer hingegen die Elektronik nutzen, schiebt er anstelle einer Geldmünze beispielsweise eine Knopfzelle ein. Dadurch kann der Wagen entriegelt werden und die Elektronik wird aktiviert. Auf diese Art und Weise wird das Problem der begrenzten Haltbarkeit und Kapazität der verschiedenen Energiequellen, wie Akkus und Batterien, nach außen verlagert, sodass die Elektronik selbst für den Betreiber wartungsfrei wird. Es muss somit der Benützer des Einkaufswagens selbst für die Stromversorgung sorgen in dem er eine geeignete Knopfzelle mit sich führt. Derartige Knopfzellen sind in der Regel sehr günstig in der Anschaffung und gut handhabbar und können beispielsweise in Schlüsselanhänger integriert werden oder vom Kunden in der Geldtasche mitgeführt werden. Ein weiterer Vorteil besteht darin, dass insbesondere dann, wenn die durch die elektrische Schaltung bereit gestellte Zusatzfunktion die Abfrage personenspezifischer Kundendaten erfordert und wenn die Speicherung dieser Daten in einem flüchtigen Speicher der Elektronik erfolgt, diese Daten automatisch gelöscht werden, wenn die als Pfandmarke in das Aufnahmefach eingeschobene Batterie beim Zurückgeben des Einkaufswagens wieder entfernt wird. Das Problem eines allfälligen Datenschutzes wird hierbei auf einfache Art und Weise gelöst.

Um die Handhabung zu erleichtern, ist gemäß einer bevorzugten Weiterbildung vorgesehen, dass die elektrische Schaltung einen verpolschutz aufweist.

Insgesamt ist mit der erfindungsgemäßen Ausbildung unter Verwendung ein und desselben Aufnahmefaches sowohl die Verwendung einer konventionellen Pfandmarke, wie beispielsweise einer Geldmünze, möglich als auch die Verwendung einer in Form einer Pfandmarke ausgebildeten Knopfzelle, wobei lediglich die Verschaltung mit der Elektronik entsprechend angepasst werden muss.

Gleichzeitig kann das erfindungsgemäß vorgesehene Aufnahmefach in konventioneller Weise als Pfandschloss mit verwendet werden, wobei bevorzugt die Ausbildung in diesem Fall derartig gebildet ist, dass ein in den Aufnahmequerschnitt des Aufnahmefaches verschiebbares Bestätigungsglied zum Auswerfen der Pfandmarke vorgesehen ist.

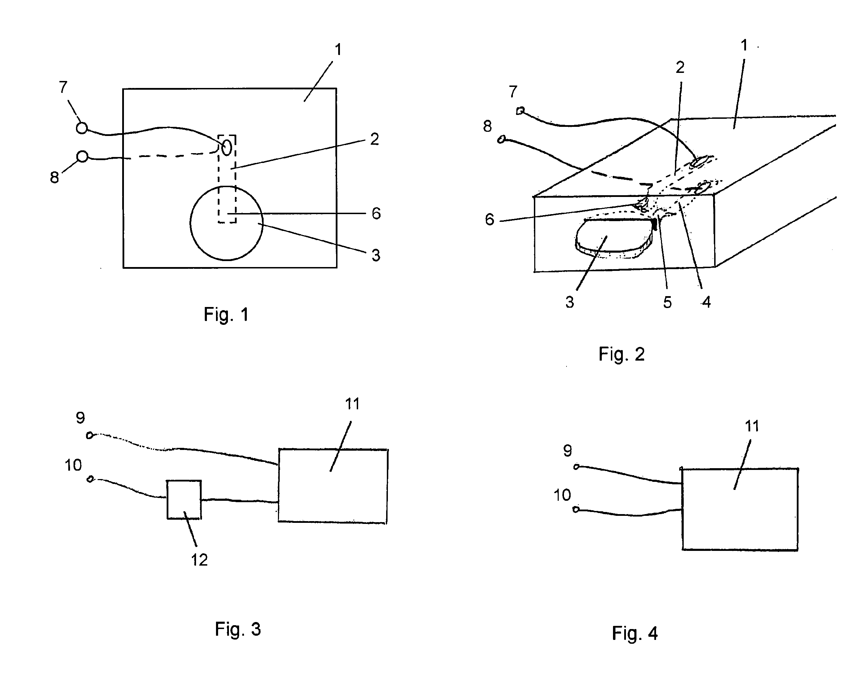

Die Erfindung wird nachfolgend anhand eines in der Zeichnung schematisch dargestellten Anführungsbeispiels näher erläutert. In dieser zeigen Fig.1 eine Draufsicht auf das erfindungsgemäße Aufnahmefach für eine Pfandmarke, Fig.2 eine perspektivische Darstellung des Aufnahmefaches gemäß Fig.1, Fig.3 die elektrische Schaltung in einer ersten Ausbildung und Fig.4 die elektrische Schaltung in einer weiteren Ausbildung.

In den Fig.1 und 2 ist das Aufnahmefach mit 1 bezeichnet und weist einen Aufnahmequerschnitt für eine Pfandmarke 3 auf. Die Pfandmarke kann hierbei aus jeder Art von elektrisch leitendem Material bestehen und beispielsweise eine elektrisch leitende Geldmünze oder eine Knopfzelle sein. Im Aufnahmefach 1 sind zwei elektrische Kontaktfedern 2 und 4 angeordnet, deren freie Enden 5 bzw. 6 zueinander gebogen sind und in den Aufnahmequerschnitt des Aufnahmefaches ragen, damit die an den freien Enden 5 bzw. 6 ausgebildeten elektrischen Kontakte mit den entsprechenden Gegenkontakten der in das Aufnahmefach 1 eingeschobenen Münze bzw. Knopfzelle 3 zusammenwirken. Die Kontaktfedern 2 und 4 sind jeweils mit Anschlusskabeln 7 und 8 verbunden, welche an die in den in den Figuren 3 und 4 mit 9 und 10 dargestellten Anschlüssen der elektrischen Schaltung 11 angeschlossen werden.

Die unterschiedlichen Möglichkeiten der Verschaltung der elektrischen Kontakte sind nun in den Figuren 3 und 4 dargestellt. In Fig.3 ist die elektrische Schaltung mit 11 bezeichnet, wobei in dem Stromkreis eine Energiequelle 12 vorgesehen ist. Die an die Anschlüsse 9 und 10 anzuschließenden Kontaktfedern 2 und 4 sind hierbei in Serie mit der Stromquelle 12 geschalten, sodass der Stromkreis nach Einschieben einer elektrisch leitenden Pfandmarke über die Pfandmarke geschlossen wird.

In Fig.4 hingegen weist die elektrische Schaltung 11 bzw. der Stromkreis keine eigene Energiequelle auf und es sind die an die Anschlüsse 9 und 10 anzuschließenden Kontakte 2 und 4 derart verschalten, dass eine an den Kontakten 2 und 4 anliegende Stromquelle parallel zur elektrischen Schaltung 11 angeordnet ist.

## Patentansprüche

1. Handwagen, insbesondere Einkaufswagen, mit einer elektrischen Schaltung mit einem Stromkreis und einem in den Stromkreis eingebundenen Aufnahmefach für eine Pfandmarke, wobei der Stromkreis in Abhängigkeit von der Anwesenheit einer Pfandmarke im Aufnahmefach geschlossen oder unterbrochen ist, **dadurch gekennzeichnet, dass** das Aufnahmefach (1) wenigstens zwei elektrische Kontakte (2,4) zum Kontaktieren von Gegenkontakten der Pfandmarke (3) aufweist.

2. Handwagen nach Anspruch 1, **dadurch gekennzeichnet, dass** die elektrischen Kontakte (2,4) in den Aufnahmequerschnitt des Aufnahmefachs (1) ragend angeordnet sind.

3. Handwagen nach Anspruch 1 oder 2, **dadurch gekennzeichnet, dass** die Kontakte (2,4) von Kontaktfedern gebildet sind.

4. Handwagen nach Anspruch 1, 2 oder 3, **dadurch gekennzeichnet, dass** der Stromkreis eine Stromquelle (12) aufweist und die elektrischen Kontakte (2,4) in Serie mit der Stromquelle (12) geschalten sind, sodass der Stromkreis nach Einschieben einer elektrisch leitenden Pfandmarke (3) über die Pfandmarke (3) geschlossen wird.

5. Handwagen nach Anspruch 1, 2 oder 3, **dadurch gekennzeichnet, dass** die elektrischen Kontakte (2,4) zur Parallelschaltung einer in das Aufnahmefach (1) als Pfandmarke (3) eingelegten Stromquelle, wie z.B. Knopfzelle, Batterie oder dgl., mit den übrigen Bauteilen der elektrischen Schaltung (11) geschalten sind.

6. Handwagen nach Anspruch 5, **dadurch gekennzeichnet, dass** die elektrische Schaltung (11) einen Verpolschutz aufweist.

7. Handwagen nach einem der Ansprüche 1 bis 6, **dadurch gekennzeichnet, dass** das Aufnahmefach (1) als Pfandschloss ausgebildet ist.

8. Handwagen nach einem der Ansprüche 1 bis 7, **dadurch gekennzeichnet, dass** ein in den Aufnahmequerschnitt des Aufnahmefaches (1) verschiebbares Betätigungsglied zum Auswerfen der Pfandmarke (3) vorgesehen ist.

9. Handwagen nach einem der Ansprüche 1 bis 8, **dadurch gekennzeichnet, dass** die elektrische Schaltung (11) und das Aufnahmefach (1) im bzw. am Griff des Einkaufswagens angeordnet sind.
